Europäisches Patentamt

European Patent Office

Office européen des brevets

(11) Numéro de publication: **0 258 129**
**A1**

(12) **DEMANDE DE BREVET EUROPEEN**

(21) Numéro de dépôt: **87401862.5**

(22) Date de dépôt: **10.08.87**

(51) Int. Cl.⁴: **G 05 D 23/13**

(30) Priorité: **11.08.86 FR 8611587**

(43) Date de publication de la demande:
**02.03.88 Bulletin 88/09**

(84) Etats contractants désignés: **DE ES GB IT SE**

(71) Demandeur: **SOCIETE DES ETABLISSEMENTS RENE TRUBERT**
**194, Avenue Général Leclerc**
**F-78220 Viroflay (FR)**

(72) Inventeur: **Trubert, Denis**
**6, avenue du Général Gouraud**
**F-78220 Viroflay (FR)**

(74) Mandataire: **Martin, Jean-Jacques et al**
**Cabinet REGIMBEAU 26, Avenue Kléber**
**F-75116 Paris (FR)**

(54) **Perfectionnements aux dispositifs mélangeurs thermostatiques, en particulier pour la distribution d'eau.**

㉗ La présente invention concerne un dispositif mélangeur thermostatique du type comprenant un corps 110 possédant une chambre interne 112 dans laquelle débouchent un orifice 116 d'entrée de fluide chaud, un orifice 117 d'entrée de fluide froid et un orifice 124 de sortie du mélange des fluides chaud et froid, un tiroir 150 logé dans la chambre 112 et qui définit en coopération avec le corps un passage de fluide chaud relié à l'orifice d'entrée de fluide chaud et un passage de fluide froid relié à l'orifice d'entrée de fluide froid, et un élément à dilatation thermique 130 fixé au tiroir 150, apte à déplacer le tiroir, dans la chambre, pour modifier le rapport des sections libres des passages de fluide et maintenir le mélange de sortie à une température prédéterminée. Selon l'invention, dans la chambre, il est prévu des éléments en matériau souple 200, 210, formant clapet anti-retour, qui reposent élastiquement contre des sièges prévus sur la surface interne de la chambre 112 sur la périphérie des orifices d'entrée de fluide 116, 117.

FIG. 2

EP 0 258 129 A1

Bundesdruckerei Berlin

**Description**

## PERFECTIONNEMENTS AUX DISPOSITIFS MELANGEURS THERMOSTATIQUES, EN PARTICULIER POUR LA DISTRIBUTION D'EAU.

La présente invention concerne les dispositifs mélangeurs d'un fluide froid et d'un fluide chaud, en particulier d'eau froide et d'eau chaude, comprenant un élément thermostatique apte à réguler la température du mélange de fluide obtenu.

De nombreux dispositifs mélangeurs du type précité comprenant un élément thermostatique ont déjà été proposés.

De tels dispositifs mélangeurs sont par exemple décrits et représentés dans les documents FR-A-2 174 134 et FR-A-2 295 327.

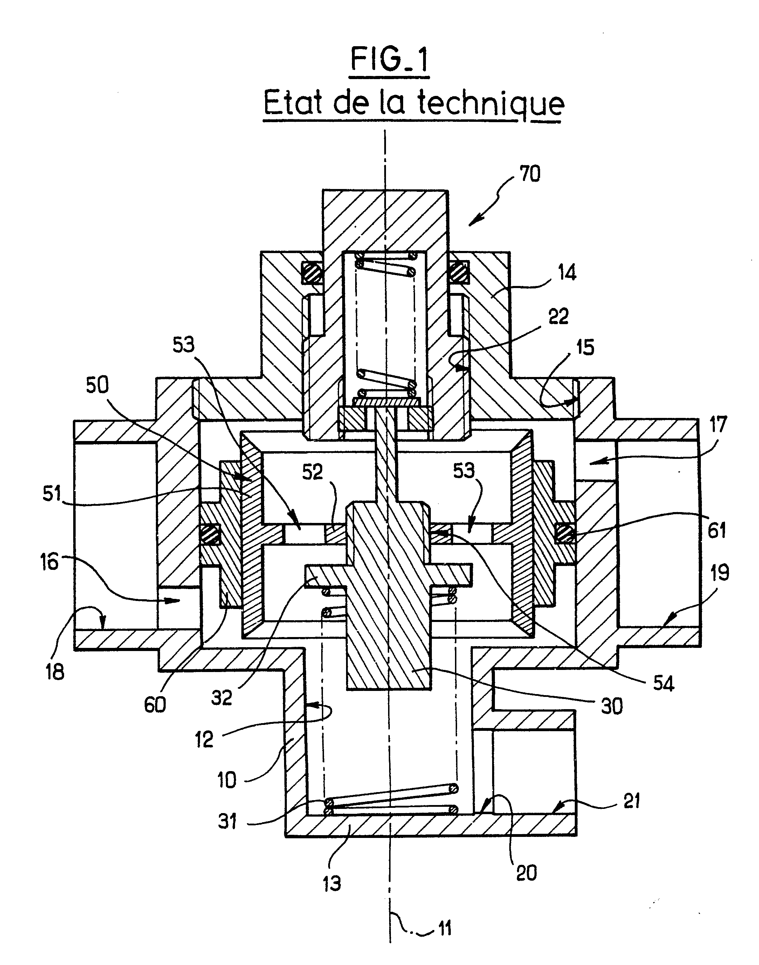

On a représenté schématiquement sur la figure 1 annexée un dispositif mélangeur classique comportant un élément thermostatique, conforme à la description du document FR-A-2 174 134.

Le dispositif mélangeur représenté sur la figure 1 comprend : un corps 10, un élément à dilatation thermique 30 et un tiroir 50 fixé sur ce dernier.

Le corps 10 définit une chambre interne 12 généralement cylindrique de révolution autour d'un axe 11. La chambre 12 est fermée axialement, d'un côté par le fond 13 du corps, de l'autre côté par un chapeau 14 vissé en 15 sur le corps.

Le corps 10 est muni d'un premier orifice d'entrée radial 16 et d'un second orifice d'entrée radial 17 qui relient la chambre interne 12, respectivement à un raccord d'arrivée d'eau chaude 18 et à un raccord d'arrivée d'eau froide 19.

Les orifices radiaux 16, 17 sont espacés axialement.

Le corps 10 est muni de plus d'un orifice de sortie 20 qui relie la chambre interne 12 à un raccord de sortie 21 par lequel le mélange de fluide est évacué.

L'élément à dilatation thermique 30 est logé dans la chambre 12 coaxialement à l'axe 11. Il est sollicité en appui contre un organe 70 de réglage de température porté par le chapeau 14, par un ressort 31. Ce dernier est inséré entre le fond 13 du corps et une collerette évasée 32 portée par l'élément 30.

Le tiroir 50 est formé d'un manchon 51 coaxial à l'axe 11 et d'une plaque 52. Celle-ci est placée à l'intérieur du manchon 51 dont elle est solidaire, transversalement à l'axe 11. La plaque 52 est perforée en 53 pour permettre le passage de fluide. La plaque 52 est de plus fixée par filetage, en 54, sur l'élément 30, pour suivre les déformations axiales de celui-ci, par dilatation thermique.

La surface externe du manchon 51 repose contre une douille 60 coaxiale à l'axe 11. Cette douille 60 repose elle-même au niveau de sa surface externe, et par l'intermédiaire d'une garniture d'étanchéité 61 contre la surface interne de la chambre 12, entre les orifices d'entrée radiaux 16 et 17 pour séparer ceux-ci.

L'organe de réglage de température 70 permet de régler la position axiale de l'élément à dilatation thermique 30 et due tiroir 50 et donc de dégager les orifices d'entrée radiaux 16, 17 proportionnellement aux débits de fluide chaud et de fluide froid requis pour obtenir la température de sortie souhaitée.

En cas de fluctuation des débits ou températures de fluide chaud et du fluide froid, l'élément à dilatation thermique 30 modifie le rapport entre les sections libres des orifices d'entrée 16, 17 de manière à modifier les proportions de mélange à maintenir à la température souhaitée, le mélange de sortie.

Le document US-A-2 657 859 décrit un dispositif mélangeur généralement similaire. Le dispositif décrit dans le document US-A-2 657 859 comprend de plus deux éléments annulaires sollicités en appui contre le tiroir par des rondelles d'appui ; les éléments annulaires sont donc sollicités dans le sens le l'ouverture des passages de fluide chaud et froid.

Les dispositifs mélangeurs du type illustré sur la figure 1 annexée, et précédemment décrit , ont déjà rendu de grands services.

Néanmoins la Demanderesse a déterminé que ces dispositifs mélangeurs jusqu'ici proposés présentent un inconvénient important dû au fait qu'ils n'interdisent pas le passage, par l'intermédiaire du corps de mélangeur, de fluide chaud, à partir due raccord d'arrivée d'eau chaude 18 vers le raccord d'arrivée d'eau froide 19, ou inversement, de fluide froid, à partir du raccord d'arrivée d'eau froide 19, vers le raccord d'arrivée d'eau chaude 18.

On a certes déjà proposé d'associer les dispositifs mélangeurs à élément thermostatique avec des clapets anti-retour pour limiter l'inconvénient précité.

Néanmoins, les tentatives actuelles consistant à adjoindre des clapets anti-retour au dispositif mélangeur n'ont pas donné pleinement satisfaction.

On a ainsi proposé de placer un clapet anti-retour sur chacune des conduites d'arrivée d'eau chaude et d'eau froide, en amont des raccords prévus sur le corps de mélangeur. Cette solution est néanmoins peu économique et peu esthétique. De plus, elle complique notablement les opérations d'installation et de maintenance.

On a également proposé de placer un clapet anti-retour au niveau des raccords d'arrivée d'eau chaude et d'arrivée d'eau froide prévus en extrémité de tubulures de liaison raccordées au corps du dispositif mélangeur. Mais dans ce cas, les raccords no sont pas toujours accessible et la maintenance est alors impossible.

Enfin, on a également proposé de placer les clapets anti-retour dans le coprs du dispositif mélangeur, au niveau des raccords d'arrivée d'eau chaude et d'arrivée d'eau froide. Ils sont alors facilement accessibles et les opérations de maintenance sont aisées. Mais cette construction conduit à la réalisation d'appareils volumineux, peu esthétiques et peu économiques.

La présente invention a maintenant pour but de proposer un nouveau dispositif mélangeur à élément thermostatique qui interdise tout retour de fluide chaud ou froid, respectivement vers le raccord d'arrivée d'eau froide ou le raccord d'arrivée d'eau chaud, tout en étant de réalisation, simple, fiable et économique.

Ce but est atteint selon la présente invention grâce à un dispositif mélangeur , de type connu en soi comportant un corps possédant une chambre interne dans laquelle débouchent un orifice d'entrée de fluide chaud, un orifice d'entrée de fluide froid et un orifice de sortie du mélange des fluides chaud et froid, un tiroir logé dans la chambre et qui définit en coopération avec le corps un passage de fluide chaud relié à l'orifice d'entrée de fluide chaud et un passage de fluide froid relié à l'orifice d'entrée de fluide froid, et un élément à dilatation thermique fixé au tiroir, apte à déplacer le tiroir dans la chambre pour modifier le rappart des sections libres des passages de fluide pour maintenir le mélange de sortie à une température prédéterminée, caractérisé par le fait qu'il comprend, dans la chambre, des éléments en matériau souple formant clapet anti-retour qui reposent élastiquement contre des sièges prévus sur la surface interne de la chambre sur la périphérie de l'orifice d'entrée de fluide chaud et de l'orifice d'entrée de fluide froid.

De préférence, les éléments en matériau souple sont formés de manchons, avantageusement en élastomère, placés entre la surface interne de la chambre et une douille servant d'appui au tiroir.

Ainsi, selon la présente invention, il est de préférence prévu deux manchons qui par l'une de leurs extrémités sont pincés entre la douille servant d'appui au tiroir et le corps de mélangeur, tout en étant susceptibles de débattement à leur autre extémité placée respectivement en regard de l'orifice d'entrée de fluide chaud et de l'orifice d'entrée de fluide froid.

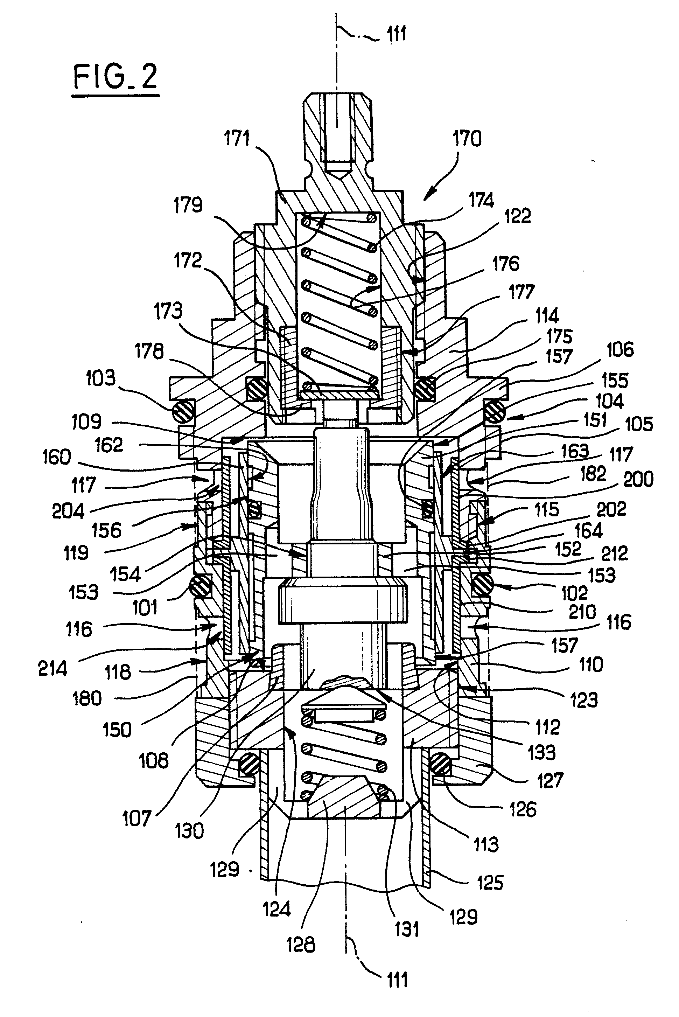

D'autres caractéristiques, buts et avantages de la présente invention apparaîtront à la lecture de la description détaillée qui va suivre et en regard des dessins annexés donnés à titre d'exemple non limitatif et sur lesquels, la figure 1 qui représente l'état de la technique ayant déjà eété décrite, la figure 2 représente une vue schématique en coupe axiale d'un dispositif mélangeur à élément thermostatique conforme à la présente invention.

On distingue sur la figure 2 un corps 110, un élément à dilatation thermique 130 et un tiroir 150 fixé sur ce dernier.

D'une façon générale, le dispositif mélangeur conforme à la présente invention présente une symétrie de révolution autour d'un axe référencé 111.

Le corps 110 est formé d'une façon générale d'une paroi cylindrique qui délimite une chambre interne 112 généralement cylindrique de révolution autour de l'axe 111. La chambre 112 est délimitée axialement, d'un côté, par une bague à filetage externe 113 vissée en 123 sur le corps 110, de l'autre côté par un chapeau 114 vissé en 115 sur le coprs 110.

Le corps 110 est pourvu sur sa surface externe de deux rainures annulaires 118, 119. Ces rainures annulaires 118, 119 sont espacées axialement. Elle sont destinées à être reliées respectivement à un conduit d'arrivée d'eau chaude et à un conduit d'arrivée d'eau froide.

Une première série d'orifices 116 traversant la paroi du corps 110 dans une direction radiale en regard de l'axe 111 relie la rainure annulaire 118 et la chambre interne 112.

Une seconde série d'orifices 117 traversant la paroi du corps 110 radialement en regard de l'axe 111 relie la seconde rainure annulaire 119 à la chambre interne 112.

La bague 113 possède un alésage traversant 124 qui forme l'orifice de sortie du mélangeur. Selon la représentation donnée sur la figure 2 cet orifice de sortie 124 débouche dans un conduit 125 coaxial à l'axe 111. Un joint torique d'étanchéité 126 est intercalé entre la surface extérieure du conduit 125 et un écrou auxiliaire 127 vissé sur la bague 113.

L'élément à dilatation thermique 130 est logé dans la chambre 112 coaxialement à l'axe 111. Il est sollicité en appui contre un organe 170 de réglage de température porté par le chapeau 114, par un ressort 131. Ce dernier est inséré entre un noyau 128 solidaire de 1a bague 113 et centré sur l'axe 111, d'une part, et la face 133 de l'élément thermostatique 130 transverale à l'axe 111 et dirigée à l'opposé du chapeau 114. Le noyau 128 est relié à la bague 113 par des ailettes radiales 129 entre lesquelles le mélange de fluide peut s'écouler de l'orifice de sortie 124 vers le conduit de sortie 125.

Le tiroir 150 est formé d'un manchon 151 coaxial à l'axe 111 et d'une plaque 152.

Celle-ci est placée à l'intérieur du manchon 151 dont elle est solidaire, transversalement à l'axe 111. La plaque 152 est perforée axialement en 153 pour permettre le passage de fluide.

La plaque 152 est de plus fixée par filetage en 154 sur l'élément thermostatique 130 pour suivre les déformations de celui-ci par dilatation thermique.

La surface externe du manchon 151 définie par une enveloppe cylindrique de révolution autour de l'axe 111, repose contre la surface interne 162, également cylinrique de révolution autour de l'axe 111, d'une douille 160 coaxiale à l'axe 111.

Cetre douille 160 est munie sur sa surface externe 163, et sensiblement à mi-longueur axiale, d'une nervure externe annulaire 164 qui est pincée lors de l'assemblage entre des portées d'appui transversales à l'axe 111 définies respectivement sur le chapeau 114 et le corps 110, au niveau du filetage coopérant de ceux-ci portant la référence générale 115.

Par ailleurs, comme précédemment indiqué, le dispositif mélangeur conforme à la présente invention illustré sur la figure 2 comprend deux manchons en matériau souple , 200, 210, formant clapet ani-retour.

Ces manchons 200, 210 sont placés dans la chambre 112. Ils reposent élastiquement contre des sièges prévus sur la surface interne de la chambre 112, respectivement sur le corps 110 et sur le chapeau 114, sur la périphérie des orifices d'entrée de fluide chaud 116 et des orifices d'entrée de fluide froid 117.

Les manchons en matériau souple 200, 210, sont de préférence réalisés en caoutchouc élastomère.

Les manchons 200, 210, qui sont coaxiaux à l'axe 111 sont de préférence munis à l'une de leurs extrémités d'une nervure annulaire 202, 212, en saillie sur leur surface externe. Ces nervures 202, 212, sont pincées respectivement entre la nervure 164, solidaire de la douille 160 et le chapeau 114 d'une part, et la même nervure 164 et le corps 110 d'autre part.

Ainsi, les manchons en élastomère 200, 210 permettent d'obtenir, lors de l'assemblage, une étanchéité certaine entre le chapeau 114 et le corps 110.

Par ailleurs, grâce aux nervures 202, 212 pincées entre le corps 110 et le chapeau 114, les manchons 200, 210 formant clapet anti-retour sont maintenus de façon certaine en position axiale telle que leurs secondes extrémités 204, 214 opposées aux nervures 202, 212, libres de débattement, recouvrent au repos respectivement les orifices d'entrée 117 et les orifices d'entrée 116.

Selon le mode de réalisation représenté sur la figure 2 , la surface externe cylindrique due tiroir 1512 repose contre la surface interne de la douille 160 au niveau de trois portées annulaires 155, 156 et 157.

Les portées 155 et 157 sont définies aux extrémités axiales du tiroir 150. La portée 156 est définie sensiblement à mi-longueur axiale de la surface externe du tiroir 151. La portée médiane 156 porte un joint torique 157 qui repose contre la surface interne de la douille 160.

La portée 155 définit en coopération avec la surface 109 du chapeau 114,transversale et dirigée vers la chambre 112,un passage annulaire de fluide froid relié aux orifices 117 d'entrée de fluide froid lorsque le manchon 200 est décollé du siège associé.

De façon symétrique la portée 157 définit en coopération avec la surface 108 de la bague 113 transversale à l'axe 111 et dirigée vers la chambre 112 un passage annulaire de fluide chaud relié aux orifices 116 d'entrée de fluide chaud lorsque le manchon 210 est décollé du siège associé.

On remarquera que la bague 113 porte un déflecteur annulaire 107 coaxial à l'axe 111 et en saillie dans la chambre interne 112. Le déflecteur 107 est placé en regard du passage de fluide chaud défini entre la portée 157 et la surface 108 de la bague 113 pour éviter que le fluide chaud n'atteigne directement l'orifice de sortie 124 et afin d'obtenir par conséquent un mélange intime des fluides chaud et froid sur la périphérie de l'organe à dilatation thermique 130.

L'organe de réglage de température 170 comprend selon la représentation de la figure 1 annexée, un bouchon fileté 171, une bague 172, une rondelle 173 et un ressort 174.

Le bouchon fileté 171 est vissé dans un alésage traversant taraudé 122 ménagé dans le chapeau 114 coaxialement à l'axe 111. Un joint torique d'étanchéité 175 intercalé entre le bouchon fileté 171 et le chapeau 114 sur l'intérieur du filetage 122 empêche toute fuite de fluide entre ceux-ci.

Le bouchon fileté 171 possède une chambre borgne interne 176. Cette chambre 176 est généralement cylindrique de révolution autour de l'axe 111 et débouche dans la chambre 112 du corps.

Cette chambre 176 est taraudée intérieurement en 177 au niveau de son embouchure. La bague 172 est filetée extérieurement et vissée dans le filetage 177. La bague 172 est de plus munie sur sa périphérie interne d'une nervure 178 en saillie. Cette dernière sert d'appui axial à la rondelle 173 de plus grand diamètre.

Plus précisément, la rondelle 173 qui sert d'appui à l'élément à dilatation thermique 130 est intercalée entre le fond 179 de la chambre 176 et la nervure 178 portée par la bague 172. De plus, le ressort 174 est intercalé entre le fond 179 de la chambre 176 et la rondelle 173 pour solliciter celle-ci en appui contre la nervure 178.

Le dispositif mélangeur à élément thermostatique conforme à la présente invention représenté sur la figure 2 est réalisé sous forme d'une cartouche unitaire susceptible d'être placée dans le boîtier d'un robinet mélangeur. Pour cela, l'écrou 127 possède un diamètre extérieur sensiblement égal à celui du corps 110. Le diamètre de l'écrou 127 qui correspond sensiblement à celui du corps 110 est par ailleurs inférieur au diamètre d'une partie 106 de plus grand évasement du chapeau 114. Cette partie 106 de plus grand évasement du chapeau 114 est munie d'un filetage externe 105 permettant de fixer la cartouche qui compose le dispositif mélangeur conforme à la présente invention dans un boîtier de robinet mélangeur tel qu'indiqué précédemment. Cette partie 106 de plus grand évasement du chapeau 114 est par ailleurs munie d'une rainure annulaire 104 qui loge un joint torique d'étanchéité 103.

Ainsi, en position assemblée dans le boîtier d'un robinet mélangeur, la rainure annulaire 118 est placée en regard d'un conduit d'arrivée d'eau chaude tandis que la rainure 119 est placée en regard d'un conduit d'arrivée d'eau froide. Pour éviter tout passage direct de fluide du conduit d'arrivée d'eau froide vers le conduit d'arrivée d'eau chaude ou inversement, le corps 110 possède sur sa périphérie externe une rainure annulaire 102 qui loge un joint torique d'étanchéité 101. A l'utilisation le joint 101 sépare le conduit d'arrivée d'eau chaude et le conduit d'arrivée d'eau froide placés respectivement en regard des rainures annulaires 118 et 119.

On notera également à l'examen de la figure 2 annexée, la présence de filtres 180, 182 respectivement dans les rainures annulaires 118 et 119.

De préférence ces filtres 180, 182 sont formés de grillage plié sous forme de manchons cylindriques coaxiaux autour de l'axe 111.

On va maintenant décrire le fonctionnement du dispositif mélangeur à élément thermostatique conforme à la présente invention.

Au repos, les manchons souples 200, 210 reposent contre la surface interne de la chambre 112 et obturent les orifices d'entrée d'eau chaude 116 et les orifices d'entrée d'eau froide 117.

L'élément à dilatation thermique 130 est repoussé contre la rondelle 173 par le ressort 131.

Le vissage du bouchon 171 dans l'alésage taraudé 122 du chapeau 114 permet de déplacer axialement la rondelle d'appui 173 et permet par

conséquent de régler la position axiale de l'élément à dilatation thermique 130 et du tiroir 150. L'intervention sur le bouchon 171 permet donc de dégager les passages annulaires définis respectivement entre les extrémités axiales du tiroir 150 et les surfaces transversales 108 et 109, proportionnellement aux débits de fluide chaud et de fluide froid requis pour obtenir la température de sortie souhaitée.

En cas de fluctuation ultérieure des débits ou températures du fluide chaud ou du fluide froid, l'élément à dilatation thermique 130 modifie le rapport entre les sections libres des passages précités de manière à modifier les proportions de mélange et à maintenir à la température souhaitée le mélange de sortie.

Le ressort 174 permet d'éviter les surcharges sur l'élément thermostatique 130.

Bien entendu, lorsque la sortie du dispositif mélangeur est ouverte, l'écoulement d'eau chaude et d'eau froide provenant des conduits respectifs d'arrivée d'eau chaude et d'eau froide décolle les manchons souples 200, 210 de leur siège respectif. Ces manchons souples 200, 210 sont reportés élastiquement contre la surface interne de la chambre 112 lorsque l'écoulement en sortie du dispositif est interrompu.

De préférence, la douille 160 est réalisée en matériau plastique. La douille 160 sert ainsi de garniture anti-friction pour le tiroir 150. Elle est par ailleurs peu sujette au dépôt de calcaire.

On notera également que lorsque les manchons souples 200, 210 sont décollés de leur siège respectif, ils servent de déflecteur pour les écoulements d'eau chaude et d'eau froide arrivant des orifices 116 et 117, pour diriger ces écoulements vers les passages définis entre les extrémités axiales du tiroir 150 et les surfaces transversales 108 et 109. Ainsi, grâce à la présence des manchons souples 200, 210 formant déflecteur on évite que les écoulements d'eau provenant des orifices 116 et 117 n'exercent une sollicitation trop forte sur la douille 160. Une telle sollicitation pourrait le cas échéant détériorer la douille 160 ou perturber le coulissement du tiroir 150 à l'intérieur de celle-ci de là conduire à un mauvais fonctionnement du dispositif.

En d'autres termes, grâce à la présence des manchons 200, 210 qui outre leur fonction de clapet anti-retour servent de déflecteur pour les écoulements d'eau provenant des orifices 116, 117, on peut utiliser une douille 160 de faible épaisseur apte à s'adapter étroitement aux dimensions du tiroir 150 pour guider celui-ci avec précision.

Bien entendu la présente invention n'est pas limitée au mode de réalisation particulier qui vient d'être décrit mais s'étend à toutes variantes conformes à son esprit.

On notera que grâce à la structure conforme à la présente invention. les opérations de maintenance sont simples et aisées. Un opérateur peut en effet intervenir aisément sur le dispositif mélangeur, y compris sur les éléments 200, 210 formant clapet anti-retour, le tiroir 150, l'élément 130 à dilatation thermique, ou les filtres 180, 182.

## Revendications

1. Dispositif mélangeur de fluide comportant un corps (110) possédant une chambre interne (112) dans laquelle débouchent au moins un orifice (116) d'entrée de fluide chaud, au moins un orifice (117) d'entrée de fluide froid et au moins un orifice (124) de sortie du mélange des fluides chaud et froid, un tiroir (150) logé dans la chambre (112) et qui définit en coopération avec le corps (110) un passage de fluide chaud relié à l'orifice d'entrée de fluide chaud et un passage de fluide froid relié à l'orifice d'entrée de fluide froid, et un élément (130) à dilatation thermique fixé au tiroir (150), apte à déplacer le tiroir (150) dans la chambre (112) pour modifier le rapport des sections libres des passages de fluide et maintenir le mélange de sortie à une température prédéterminée, caractérisé par le fait qu'il comprend, dans la chambre (112), des éléments (200, 210), en matériau souple, formant clapet anti-retour, qui reposent élastiquement contre des sièges prévus sur la surface interne de la chambre (112), sur la périphérie de l'orifice (116) d'entrée de fluide chaud et de l'orifice (117) d'entrée de fluide froid.

2. Dispositif mélangeur selon la revendication 1, caractérisé par le fait que les éléments (200, 210) en matériau souple formant clapet anit-retour sont formés de manchons placés entre la surface interne de la chambre (112) et une douille (160) servant d'appui au tiroir (150).

3. Dispositif mélangeur selon la revendication 2, caractérisé par le fait qu'il est prévu deux manchons (200, 210) formant clapet anti-retour qui par l'une de leurs extrémités axiales sont pincés entre la douille (160) servant d'appui au tiroir et le corps (110) tout en étant susceptibles de débattement au niveau de leur autre extrémité axiale, qui au repos recouvre les orifices d'entrée de fluide.

4. Dispositif mélangeur selon l'une des revendications 2 ou 3, caractérisé par le fait que les manchons (200, 210) formant clapet anti-retour sont formés en caoutchouc élastomère.

5. Dispositif mélangeur selon l'une des revendications 2, 3 ou 4, caractérisé par le fait que la douille (160) servant d'appui au tiroir (150) est formée en matière plastique.

6. Dispositif mélangeur selon l'une des revendications 2 à 5, caractérisé par le fait que le tiroir (150) repose sur la surface interne cylindrique de la douille (160).

7. Dispositif mélangeur selon l'une des revendications 1 à 6, caractérisé par le fait que le corps (110) possède deux rainures annulaires externes (118, 119) et deux séries d'orifices traversants (116, 117) reliant respectivement l'une des rainures (118, 119) à la chambre interne.

8. Dispositif mélangeur selon la revendication 7, caractérisé par le fait que des filtres (180, 182) en forme de manchon sont placés dans les rainures annulaires (118, 119).

9. Dispositif mélangeur selon l'une des revendications 1 à 8, caractérisé par le fait qu'il comprend un corps (110) possédant une chambre interne (112) généralement cylindrique de révolution dans laquelle débouchent au moins un orifice radial (116) d'entrée de fluide chaud, au moins un orifice radial (117) d'entrée de fluide froid, et un orifice (124) de sortie du mélange des fluides, deux manchons (200, 210) en matériau élastomère logés dans la chambre (112), une douille en matière plastique (160) logée dans la chambre (112) sur l'intérieur des manchons (200, 210), la douille (160) possédant sur sa surface externe une nervue annulaire en saillie (164) telle que l'une des extrémités axiales des manchons (200, 210) soit pincée entre la nervure (164) solidaire de la douille (160) et le corps (110) tandis que l'autre extrémité axiale des manchons (200, 210) repose élastiquement contre les sièges prévus sur la surface interne de la chambre (112) sur la périphérie de l'orifice d'entrée (116) de fluide chaud et de l'orifice d'entrée (117) de fluide froid respectivement, un tiroir (150) en forme de manchon cylindrique porté à coulissement sur la surface interne de la douille (160), le tiroir définissant en coopération avec le corps (110) un passage de fluide chaud relié à l'orifice d'entrée de fluide chaud (116) et un passage de fluide froid relié à l'orifice d'entrée de fluide froid (117), et un élément à dilatation thermique (130) fixé au tiroir (150), apte à déplacer le tiroir dans la chambre (112) pour modifier le rapport des sections libres des passages de fluide afin de maintenir le mélange de sortie à une température prédéterminée.

0258129

# FIG_1
## Etat de la technique

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 657 859 (DETROIT CONTROLS CORP.) <br> * Colonne 4, ligne 5 - colonne 5, ligne 2; figure 1 * | 1 | G 05 D 23/13 |
| A | | 2-4 | |
| | --- | | |
| A | US-A-2 792 178 (L. LITTLETON) <br> * Colonne 2, lignes 18-43; figures 1-3 * | 2 | |
| | --- | | |
| A,D | FR-A-2 174 135 (A. KNAPP) <br> * Page 8, lignes 1-25; figure 1 * | 1 | |
| | --- | | |
| A,D | FR-A-2 295 327 (PONT A MOUSSON) <br> * Page 7, lignes 1-18; figure 1 * | 1 | |
| | ----- | | |

**DOMAINES TECHNIQUES RECHERCHES (Int. Cl.4)**

G 05 D

Le présent rapport a été établi pour toutes les revendications

| Lieu de la recherche | Date d'achèvement de la recherche | Examinateur |
|---|---|---|
| LA HAYE | 16-11-1987 | HELOT H.V. |